# FASCICULE DE BREVET EUROPEEN

(11) **EP 3 657 061 B1**
(45) Date de publication et mention de la délivrance du brevet: **26.10.2022**
(21) Numéro de dépôt: 19211600.2
(22) Date de dépôt: 26.11.2019
(51) Int. Cl.: F16L 41/06, F16K 1/00, F16L 55/07, H02K 7/18, B23B 41/00, E03B 7/07, F03B 13/00

(54) **PROCEDE DE POSE D'UN ORGANE HYDRAULIQUE ET INSTALLATION**
EINBAUVERFAHREN EINES HYDRAULISCHEN ORGANS UND ANLAGE
METHOD FOR INSTALLING A HYDRAULIC UNIT AND INSTALLATION

(30) Priorité: 26.11.2018 FR 1871862
(43) Date de publication de la demande: 27.05.2020
(73) Titulaire: Equipement Industriel Europeen, 77260 Sept Sorts (FR)
(72) Inventeur: DE SOUSA, José, 51510 FAGNIERES (FR); RATTE, Jean-Michel, 02650 CREZANCY (FR)
(74) Mandataire: Cabinet Beau de Loménie

(56) Documents cités:
- DE-A1-102011 015 819
- US-A- 3 948 282
- US-A1- 2011 221 197

## Description

### Domaine Technique

Le présent exposé concerne un procédé de pose d'un organe hydraulique dans une conduite en charge, ainsi qu'une installation de poste et une installation hydraulique munie d'un tel organe hydraulique.

Un tel procédé peut être utilisé pour installer un organe hydraulique, par exemple une turbine, au sein d'une conduite sans interrompre la circulation dans cette dernière. En particulier, ce procédé est tout particulièrement utile pour poser des organes hydrauliques au sein d'un réseau d'eau potable sans couper la fourniture d'eau potable des usagers concernés.

### Technique antérieure

Dans certaines circonstances, il est utile ou nécessaire de poser des organes hydrauliques au sein d'un réseau de fluide déjà en place. En particulier, il existe depuis désormais plusieurs années des turbines prévues pour convertir une partie de l'énergie hydraulique de la circulation d'une conduite en énergie électrique.

De telles turbines sont particulièrement utiles pour fournir des sources d'électricité locales permettant d'alimenter localement des infrastructures de voirie par exemple, tels des lampadaires ou des feux tricolores, sans dépendre de l'existence d'un réseau électrique de plus grande ampleur. De telles turbines peuvent également permettre de valoriser certaines circulations de fluide actuellement peu valorisées.

Ainsi, différents concepts de turbines existent. Certaines d'entre elles sont montées en dérivation de la conduite visée, ce qui nécessite de détourner au moins une partie du flux de la conduite vers la turbine, installée sur le côté. De telles turbines peuvent ainsi être de tailles importantes et fournir une quantité importante d'électricité. Toutefois, elles sont principalement adaptées pour les conduites ayant des diamètres très importants et des débits très élevés. En outre, elles sont très volumineuses et nécessitent l'interruption et la vidange de la conduite pour mettre en place la dérivation : on comprend donc que ces solutions sont mal adaptées aux réseaux utilitaires de petits diamètres, et notamment aux réseaux de distribution d'eau potable.

D'autres turbines, de tailles plus réduites, s'insèrent directement dans le flux d'une conduite existante. Ces turbines, beaucoup plus compactes, sont mieux adaptées aux faibles diamètres et peuvent ainsi s'installer plus facilement dans un environnement urbain. Toutefois, à ce jour, ces turbines sont montées en usine dans un tronçon de conduite qu'il est nécessaire d'insérer dans la circulation : ceci requiert donc d'interrompre la circulation du fluide, de vidanger la conduite, de la découper, et d'insérer le tronçon de conduite comprenant la turbine dans l'espace ainsi libéré. On comprend donc que de telles solutions, nécessitant l'interruption de la circulation, rendent difficile leur mise en œuvre, tout particulièrement pour des réseaux de distribution d'eau potable. Le document US 3 948 282 illustre pour sa part un procédé permettant de mettre en place un organe hydraulique au sein d'une conduite en charge.

Il existe donc un réel besoin pour un procédé de pose et une installation de pose permettant la pose d'un organe hydraulique dans une conduite en charge, ainsi que pour une installation hydraulique munie d'un tel organe hydraulique, et qui soient dépourvus, au moins en partie, des inconvénients inhérents aux configurations connues précitées.

### Exposé de l'invention

Le présent exposé concerne un procédé de pose d'un organe hydraulique dans une conduite en charge selon la revendication 1.

Ainsi, grâce à ce procédé, il est possible de poser un organe hydraulique, par exemple une turbine, dans une conduite en charge, c'est-à-dire sans interrompre la circulation de fluide et sans vidanger la conduite.

En effet, le sas, installé sur le côté de la conduite grâce au collier et à sa bouche de dérivation, permet de former un espace de travail étanche pouvant entrer en communication avec le fluide de la conduite. La vanne de sectionnement permet d'ouvrir et de fermer le sas sur son côté proximal, c'est-à-dire du côté de la bouche de dérivation, tandis que les dispositifs de percement et d'insertion permettent, lorsqu'ils sont installés, de fermer le sas sur son côté distal. Ainsi, lorsqu'il est nécessaire d'introduire un objet dans le sas, il est possible de fermer la vanne de sectionnement, ce qui isole le volume de sas du tronçon de conduite et autorise ainsi l'ouverture de son côté distal ; puis, une fois l'objet introduit dans le volume de sas et le sas refermé sur son côté distal, il est possible d'ouvrir la vanne de sectionnement et de pousser l'objet vers le tronçon de conduite sans que le fluide ne s'échappe de cet espace de travail étanche.

Grâce à ce sas, il est ainsi possible de percer une ouverture dans la paroi du tronçon de conduite depuis cet espace de travail étanche, puis d'insérer l'organe hydraulique également depuis cet espace de travail étanche.

Ainsi, aucune interruption de la circulation dans la conduite ni aucune vidange de cette dernière n'est nécessaire, ce qui facilite grandement sa mise en œuvre. La pose de l'organe hydraulique peut ainsi être réalisée sans interruption du service, et donc de manière tout à fait transparente pour les usagers du réseau. Il est donc possible de s'affranchir des contraintes habituellement rencontrées lorsque le service doit être interrompu : délai de préavis, minimisation de la durée de l'intervention, travail en horaires décalés etc.

La durée de l'intervention peut également être réduite puisqu'aucune vidange n'est nécessaire et que le profil de la conduite n'a pas besoin d'être rectifié.

Dans certains modes de réalisation, la pression du fluide circulant dans le tronçon de conduite est supérieure ou égale à 3 bars, éventuellement supérieure ou égale à 6 bars.

Dans certains modes de réalisation, la conduite en charge est une conduite de liquide, de préférence d'eau, de préférence encore d'eau potable.

Dans certains modes de réalisation, le tronçon de conduite est continu de l'extrémité amont à l'extrémité aval du collier. En particulier, le tronçon de conduite ne comprend aucune césure ou raccord de quelque nature que ce soit entre l'extrémité amont et l'extrémité aval du collier.

Dans certains modes de réalisation, le tronçon de conduite possède un diamètre compris entre 100 et 300 mm.

Dans certains modes de réalisation, la bouche de dérivation du collier s'étend perpendiculairement à l'axe du collier, de préférence vers le haut.

Dans certains modes de réalisation, le collier comprend un joint annulaire encerclant la jonction entre la bouche de dérivation et la partie axiale du collier. Ce joint permet d'assurer l'étanchéité de l'espace intérieur de la bouche de dérivation par rapport à l'interstice éventuel laissé entre le tronçon de conduite et la partie axiale du collier. On réduit ainsi le risque de fuite du liquide hors de l'espace de travail le long des parois axiales du collier.

Dans certains modes de réalisation, le collier comprend deux parties distinctes rapportées l'une contre l'autre autour du tronçon de conduite. Elles peuvent notamment être rapportées à l'aide de brides boulonnées.

Dans le procédé selon l'invention, la bouche de dérivation comprend un raccord latéral. Ce raccord peut notamment servir à prélever du liquide issu de la conduite, en vue par exemple de remplir le sas ou de pressuriser un autre espace de l'installation de pose. En particulier, connecté au volume du sas, on permet un équilibrage des pressions de chaque côté de la vanne de sectionnement, ce qui facilite sa manœuvre ; cela facilite également les translations du dispositif de percement ou de l'organe hydraulique au cours de leur insertion.

Dans certains modes de réalisation, la bouche de dérivation est munie d'un épaulement interne. Cet épaulement permet de former une butée contre laquelle l'organe hydraulique ou tout autre objet inséré dans l'espace de travail peut s'appuyer pour limiter la course de ce dernier ou permettre son maintien en position.

Dans certains modes de réalisation, la paroi périphérique de la bouche de dérivation est munie d'au moins un passage de fixation. Il comprend de préférence au moins 3 passages de fixation, de préférence encore 4 passages de fixation, qui peuvent être prévus à équidistance les uns des autres. Ils peuvent également être taraudés. Ces passages de fixation permettent, une fois l'organe hydraulique inséré dans le tronçon de conduite, de fixer ce dernier au moins temporairement le temps de démonter l'installation de pose et de fixer durablement l'organe hydraulique.

Dans certains modes de réalisation, le diamètre de la bouche de dérivation est au moins égal, et de préférence sensiblement égal, au diamètre du tronçon de conduite. Ceci permet de laisser passer un organe hydraulique dont la taille est comparable à celle du tronçon de conduite.

Dans certains modes de réalisation, le sas est rapporté à l'extrémité distale de la bouche de dérivation.

Dans d'autres modes de réalisation, le sas fait partie intégrante du collier.

Dans certains modes de réalisation, le procédé comprend une étape d'installation du sas à l'extrémité distale de la bouche de dérivation.

Dans certains modes de réalisation, le sas comprend un volume de sas situé du côté distal de la vanne de sectionnement. Ce volume de sas permet d'introduire des objets dans le sas, du côté distal de la vanne de sectionnement, sans entraîner de fuite.

Dans certains modes de réalisation, le volume de sas est formé par un conduit de sas rapporté sur la vanne de sectionnement. Grâce à un tel conduit de sas rapporté, il est possible d'ajuster la taille du sas en remplaçant uniquement le conduit de sas tout en gardant une même vanne de sectionnement.

Dans certains modes de réalisation, un premier sas est mis en place avant l'installation du dispositif de percement et un deuxième sas est mis en place à la place du premier sas avant l'installation du dispositif d'insertion. Lorsque le volume de sas est formé par un conduit de sas rapporté, la vanne de sectionnement peut être commune aux premier et deuxième sas, seuls les conduits de sas étant différents. En particulier, les volumes de sas des premiers et deuxième sas peuvent être différents. Ceci permet d'ajuster le volume de sas à la taille de l'objet à introduire dans le sas, dispositif de percement ou organe hydraulique notamment.

Dans d'autres modes de réalisation, le sas est unique et utilisé à la fois pour l'installation du dispositif de percement et pour l'installation du dispositif d'insertion. Ainsi, dans la présente demande, lorsque le sas est mentionné sans préciser s'il s'agit du premier sas, du deuxième sas ou de l'unique sas, on entend désigner le sas effectivement utilisé lors de l'étape concernée ou, lorsqu'aucune étape spécifique n'est visée, au moins l'un ou chacun des sas utilisés.

Dans le procédé selon l'invention, le sas comprend au moins un raccord latéral. Ce raccord latéral permet de remplir le sas de fluide avant l'ouverture de la vanne de sectionnement et/ou permet de purger l'air du volume de sas, ce qui évite de piéger une poche d'air à l'intérieur du sas et réduit le différentiel de pression de part et d'autre de la vanne de sectionnement. Ce raccord latéral permet également de vidanger plus facilement le sas.

Dans certains modes de réalisation, le sas comprend au moins un premier raccord latéral prévu à l'extrémité proximale du volume de sas et un deuxième raccord latéral prévu à l'extrémité distale du volume de sas. Il est ainsi possible de remplir le sas de fluide par un premier raccord et de purger l'air du sas par le deuxième raccord, même lorsque le côté distal du sas est fermé.

Dans certains modes de réalisation, le sas comprend au moins un regard latéral fermé par un bouchon amovible. Ce regard permet d'intervenir à l'intérieur du sas même lorsque son côté distal est fermé, par exemple pour manipuler un objet enfermé dans le sas. En particulier, un tel regard peut permettre de désaccoupler l'organe hydraulique du dispositif d'insertion une fois l'organe hydraulique installé dans le tronçon de conduite.

Dans certains modes de réalisation, la vanne du sectionnement est manœuvrable entre une position de fermeture, dans laquelle l'obturateur de la vanne ferme complétement la voie de la vanne, et une position d'ouverture, dans laquelle l'obturateur obstrue la voie à moins de 10%, de préférence à moins de 5%, de préférence est complétement escamoté.

Dans certains modes de réalisation, la vanne de sectionnement est une vanne guillotine.

Dans certains modes de réalisation, le dispositif de percement comprend une plate-forme d'insertion traversée de manière étanche par un arbre, un organe de percement, de préférence une scie-cloche, monté à l'extrémité proximale de l'arbre, et un actionneur, de préférence un moteur, monté à l'extrémité distale de l'arbre.

Dans certains modes de réalisation, l'arbre du dispositif de percement est mobile en translation pour appliquer l'organe de percement contre le tronçon de conduite. Ainsi, la plate-forme d'insertion assure une liaison pivot glissant avec l'arbre.

Dans certains modes de réalisation, l'organe de percement est configuré pour retenir et extraire la pastille découpée dans le tronçon de conduite.

Dans certains modes de réalisation, le diamètre de l'ouverture percée dans le tronçon de conduite est au moins égal à 80%, de préférence au moins 90%, du diamètre de la bouche de dérivation. Ceci permet de laisser passer un organe hydraulique dont la taille est comparable à celle du tronçon de conduite.

Dans certains modes de réalisation, le dispositif d'insertion comprend une plate-forme d'insertion traversée de manière étanche par un arbre. Cette plate-forme d'insertion est de préférence la même que celle du dispositif de percement ; de préférence, cette plate-forme d'insertion est commune au dispositif de percement et au dispositif d'insertion.

Dans certains modes de réalisation, l'arbre du dispositif d'insertion est connecté à un arbre de l'organe hydraulique. Cette connexion peut notamment être assurée par un système à goupille.

Dans certains modes de réalisation, le dispositif d'insertion comprend un système anti-rotation bloquant la rotation de l'arbre du dispositif d'insertion. De cette manière, l'orientation de l'organe hydraulique reste constante durant l'insertion. De plus, lorsque l'organe hydraulique est un organe rotatif, on évite ainsi que ce dernier ne tourne sous l'effet de la circulation de fluide dans le tronçon de conduite.

Dans certains modes de réalisation, l'organe hydraulique est inséré dans le tronçon de conduite selon une orientation angulaire prédéterminée. On s'assure ainsi d'installer l'organe hydraulique dans l'orientation permettant sa fixation et/ou son fonctionnement.

Dans certains modes de réalisation, le dispositif d'insertion comprend un actionneur configuré pour entraîner en translation l'arbre du dispositif d'insertion. Cet actionneur aide à lutter contre la pression du fluide dans le tronçon de conduite.

Dans certains modes de réalisation, l'actionneur comprend une manivelle entraînant une tige filetée connectée à l'arbre du dispositif d'insertion et engagée dans une traverse taraudée.

Dans certains modes de réalisation, le sas est rempli d'eau avant l'étape de percement et/ou avant l'étape d'insertion de l'organe hydraulique. Ceci évite de piéger une poche d'air à l'intérieur du sas et réduit le différentiel de pression de part et d'autre de la vanne de sectionnement, ce qui facilite la manœuvre de la vanne de sectionnement.

Dans le procédé selon l'exposé, une circulation de fluide est assurée entre la bouche de dérivation et le sas pendant l'étape de percement et/ou pendant l'étape d'insertion de l'organe hydraulique. Cette circulation est de préférence connectée au tiers distal du volume de sas. Ceci permet d'équilibrer les pressions entre le sommet du sas et le tronçon de conduite, facilitant ainsi l'insertion du dispositif de percement ou de l'organe hydraulique.

Dans certains modes de réalisation, l'organe hydraulique est poussé vers le tronçon de conduite jusqu'à ce qu'une butée de l'organe hydraulique atteigne l'épaulement interne de la bouche de dérivation.

Dans certains modes de réalisation, l'organe hydraulique est fixé au moins temporairement sur la paroi périphérique de la bouche de dérivation. On peut ainsi démonter le reste de l'installation de pose.

Dans certains modes de réalisation, le sas est retiré après l'insertion de l'organe hydraulique dans le tronçon de conduite.

Dans certains modes de réalisation, une contre-bride est rapportée sur la bride de fixation de la bouche de dérivation, bloquant une portion de blocage de l'organe hydraulique. En particulier, cette contre-bride peut s'appliquer contre un épaulement de l'organe hydraulique. Une telle fixation, colinéaire à la force d'éjection s'exerçant sur l'organe hydraulique, permet de mieux résister à cette dernière.

Dans certains modes de réalisation, la contre-bride est annulaire et laisse passer en son centre une servitude de l'organe hydraulique, par exemple un arbre.

Dans certains modes de réalisation, l'organe hydraulique comprend une partie utile, insérée dans l'espace intérieur du tronçon de conduite, et une partie de fixation, s'étendant dans la bouche de dérivation. Outre sa fonction de fixation, la partie de fixation peut également remplir d'autres fonctions : elle peut par exemple comprendre un système de palier pour un arbre de l'organe hydraulique.

Dans certains modes de réalisation, la partie de fixation comprend un joint annulaire empêchant le fluide de la conduite de s'échapper par la bouche de dérivation une fois l'organe hydraulique installé.

Dans certains modes de réalisation, l'organe hydraulique est une turbine.

Le présent exposé concerne également une installation de pose selon la revendication 11.

Naturellement, selon son mode de réalisation, cette installation de pose peut comprendre un nombre quelconque de caractéristiques parmi celles présentées ci-dessus dans le cadre du procédé de pose.

Dans le présent exposé, les termes « axial », « radial », « tangentiel », « proximal », « distal » et leurs dérivés sont définis par rapport à l'axe principal du tronçon de conduite. Les termes « amont » et « aval » sont définis par rapport à la circulation du fluide dans le tronçon de conduite.

Les caractéristiques et avantages précités, ainsi que d'autres, apparaîtront à la lecture de la description détaillée qui suit, d'exemples de réalisation du procédé et des installations proposées. Cette description détaillée fait référence aux dessins annexés.

### Brève description des dessins

[Fig. 1] La Fig. 1 illustre une installation de pose comprenant un collier monté sur un tronçon de conduite.
[Fig. 2] La Fig. 2 est une vue en coupe de la Fig. 1
[Fig. 3] La Fig. 3 illustre l'installation de pose équipée une vanne de sectionnement.
[Fig. 4] La Fig. 4 illustre l'installation de pose équipée d'un premier conduit de sas.
[Fig. 5] La Fig. 5 illustre un dispositif de percement.
[Fig. 6] La Fig. 6 illustre l'installation de pose équipée du dispositif de percement.
[Fig. 7] La Fig. 7 illustre l'étape de percement du tronçon de conduite.
[Fig. 8] La Fig. 8 illustre un organe hydraulique.
[Fig. 9] La Fig. 9 illustre un dispositif d'insertion.
[Fig. 10] La Fig. 10 illustre l'installation de pose équipée d'un deuxième conduit de sas.
[Fig. 11] La Fig. 11 illustre l'installation de pose équipée du dispositif d'insertion.
[Fig. 12] La Fig. 12 illustre l'étape d'insertion de l'organe hydraulique.
[Fig. 13] La Fig. 13 illustre une installation hydraulique.
[Fig. 14] La Fig. 14 est une vue en coupe de la Fig. 13.

### Description des modes de réalisation

Afin de rendre plus concret l'exposé, des exemples de procédé et d'installations sont décrits en détail ci-après, en référence aux dessins annexés. Il est rappelé que l'invention ne se limite pas à ces exemples. Les dessins annexés sont schématiques et visent avant tout à illustrer les principes de l'exposé.

Sur ces dessins, d'une figure (FIG) à l'autre, des éléments (ou parties d'élément) identiques sont repérés par les mêmes signes de référence.

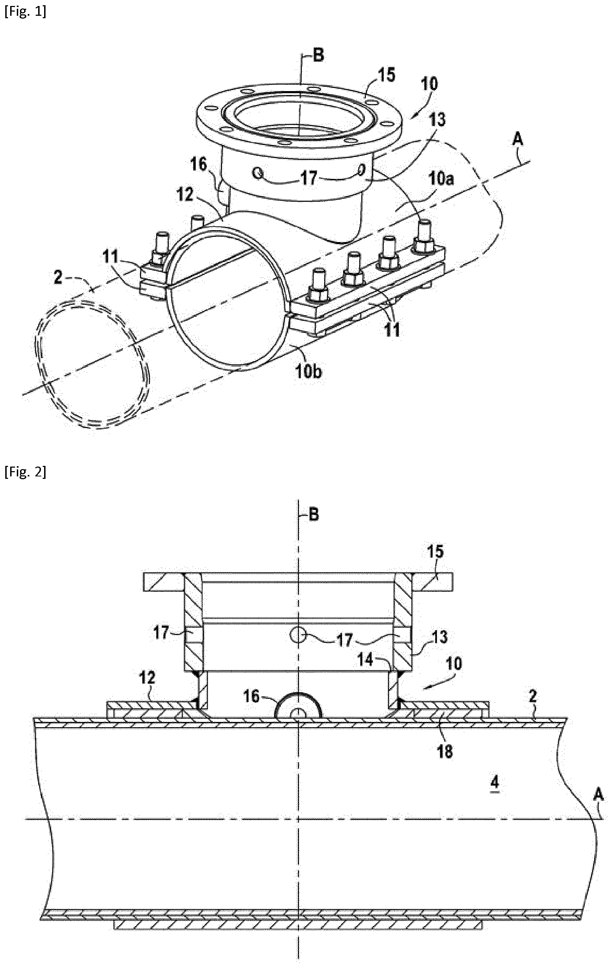

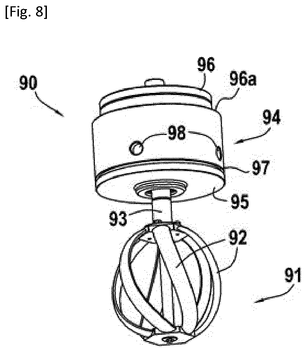

Les Fig. 1 et 2 illustrent un tronçon de conduite 2 à l'intérieur duquel on souhaite installer un organe hydraulique, en l'espèce une turbine 90 (visible sur la Fig. 8). Ce tronçon de conduite 2 est continu et totalement dépourvu de césure. Dans le présent exemple, le tronçon de conduite 2 appartient à un réseau de distribution d'eau potable et possède un diamètre de 200 mm. Le tronçon de conduite 2 est en charge durant le procédé de pose de la turbine 90.

Un collier 10 est installé autour du tronçon de conduite 2, au niveau où l'on souhaite installer la turbine 90. Ce collier 10 comprend une partie supérieure 10a, semi-cylindrique, et une partie inférieure 10b, également semi-cylindrique, pouvant être rapportées et fixées l'une contre l'autre à l'aide de brides boulonnées 11, formant ainsi une partie axiale 12 cylindrique dont le diamètre est sensiblement égal à celui du tronçon de conduite 2 de manière à enserrer ce dernier.

Le collier 10 possède également une bouche de dérivation 13 s'étendant depuis la partie axiale 12, selon un axe B perpendiculaire à l'axe principal A du tronçon de conduite 2, et sensiblement au milieu axialement et tangentiellement de la partie supérieure 10a. Le diamètre de cette bouche de dérivation 13 est égal à celui du tronçon de conduite.

Cette bouche de dérivation 13 possède un épaulement interne 14 dirigé vers le haut, c'est-à-dire vers le côté distal selon l'axe B. Elle possède également une bride de fixation 15 à son extrémité distale. Par ailleurs, sa paroi périphérique comprend un raccord latéral 16, permettant de connecter l'espace intérieur de la bouche de dérivation 13 avec l'extérieur, et des passages de fixation 17, ici au nombre de quatre disposés à 90° les uns des autres.

Un joint annulaire 18 est disposé entre le tronçon de conduite 2 et la partie axiale 12 du collier 10, tout autour de la jonction avec la bouche de dérivation 13.

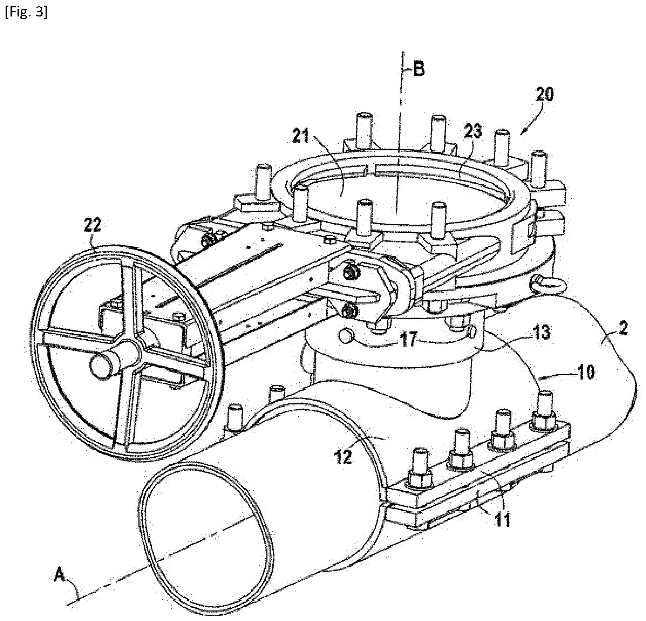

Comme cela est illustré sur la Fig. 3, une fois le collier 10 fixé autour du tronçon de conduite 2, une vanne de sectionnement, ici une vanne à guillotine 20, est montée de manière étanche à l'extrémité distale de la bouche de dérivation 13 grâce à la bride de fixation 15, un joint pouvant être inséré entre ces deux éléments.

La vanne guillotine possède un obturateur 21 commandé par une roue de commande 22 entre une position de fermeture, dans laquelle l'obturateur 21 ferme complètement la voie 23 de la vanne 20, et une position d'ouverture, dans laquelle l'obturateur 21 est complètement escamoté en dehors de la voie 23.

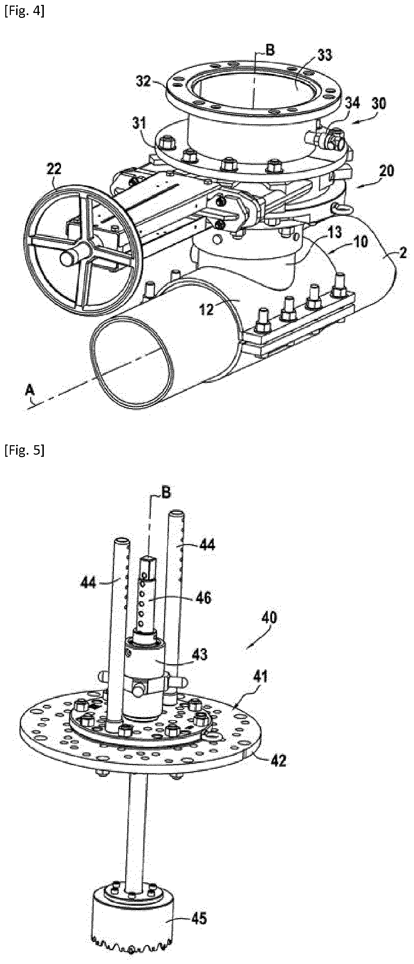

Comme cela est illustré sur la Fig. 4, un premier conduit de sas 30 est ensuite monté sur le côté distal de la vanne guillotine 20. Ce premier conduit de sas 30 comprend une bride de fixation proximale 31 permettant sa fixation étanche sur la vanne guillotine 20, un joint pouvant être inséré entre ces deux éléments. Le premier conduit de sas 30 comprend également une bride de fixation distale 32. L'espace intérieur du conduit de sas 30 forme ainsi un volume de sas 33. Par ailleurs, sa paroi périphérique comprend un raccord latéral 34, permettant de connecter le volume de sas 33 avec l'extérieur.

La Fig. 5 illustre ensuite un dispositif de percement 40 comprenant une plate-forme d'insertion 41 et un dispositif de découpe, ici une scie-cloche 45, monté à l'extrémité d'un arbre 46.

La plate-forme d'insertion 41 comprend un plateau 42, pouvant être monté de manière étanche sur la bride de fixation distale 32 du premier conduit de sas 30, et un manchon 43 dans lequel l'arbre 46 est engagé : ce manchon 43 forme une liaison pivot glissant pour l'arbre 46 de telle sorte que ce dernier peut à la fois tourner autour de l'axe B mais également être déplacé en translation le long de ce même axe B par rapport au plateau 42. La plate-forme d'insertion 41 comprend également deux colonnettes 44 s'étendant parallèlement au manchon 43 du côté distal du plateau 42, de manière diamétralement opposée de part et d'autre du manchon 43.

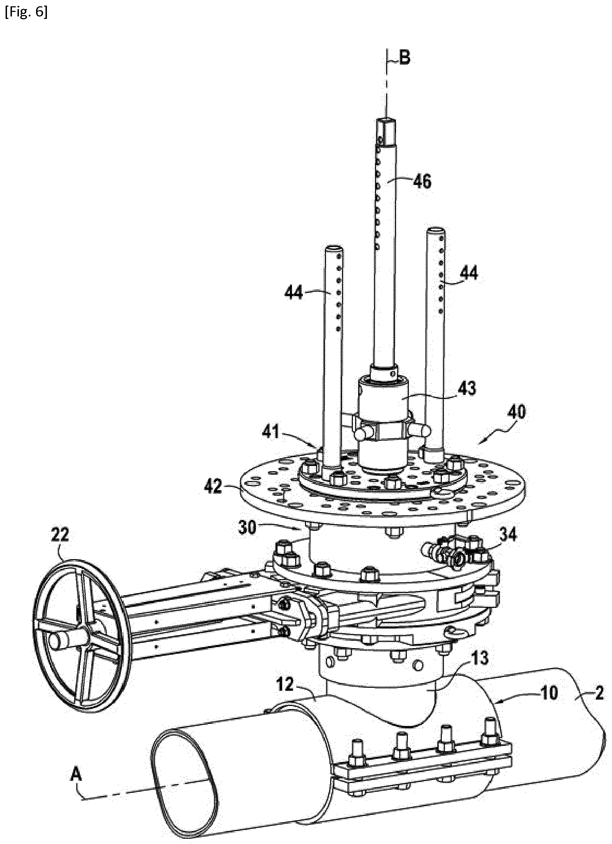

Comme cela est illustré sur la Fig. 6, la plate-forme d'insertion 41 est alors montée de manière étanche sur l'extrémité distale du premier conduit de sas 30, un joint pouvant être inséré entre ces deux éléments, de manière à refermer de manière étanche le volume de sas 33.

La scie-cloche 45 se trouve alors dans le volume de sas 33. La vanne guillotine 20 peut alors être ouverte, à moins que ce n'était déjà le cas, et la scie-cloche 45 peut être poussée manuellement via l'arbre 46 à travers la voie 23 de la vanne guillotine 20 et la bouche de dérivation 13 jusqu'à entrer en contact avec la paroi du tronçon de conduite 2. De l'eau est alors injectée dans le volume de travail formé par la bouche de dérivation 13, la voie 23 de la vanne 20 et le volume de sas 33 par l'intermédiaire du raccord latéral 16 de la bouche de dérivation 13 tout en laissant l'air s'échapper par le raccord latéral 34 du premier conduit de sas 30 ; lorsque de l'eau s'échappe du raccord latéral 34, on ferme alors ce dernier.

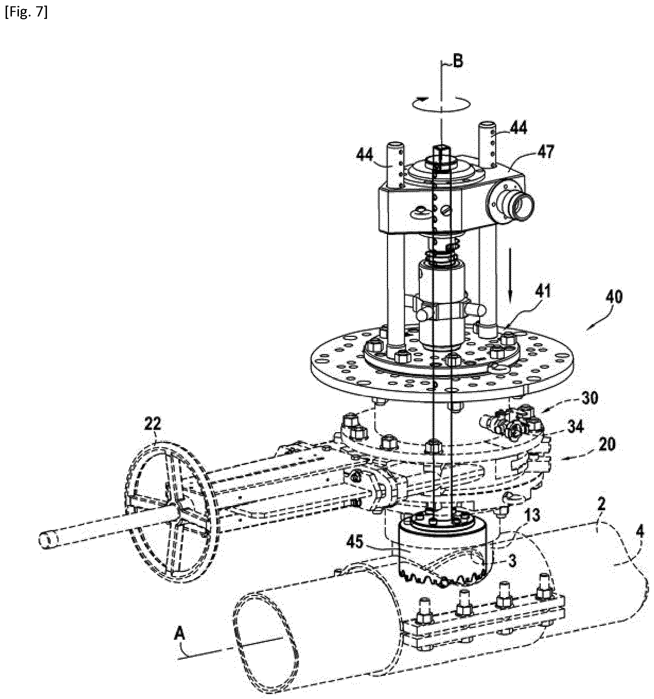

Ensuite, comme cela est illustré sur la Fig. 7, un moteur 47 est monté à l'extrémité distale de la plate-forme d'insertion 41, grâce aux colonnettes 44, et accouplé sur l'arbre 46 de la scie-cloche 45.

Le moteur 47 est alors démarré et une pression verticale est appliquée pour percer une ouverture 3 dans le tronçon de conduite 2, dans l'alignement de la bouche de dérivation 13.

Une fois l'ouverture 3 percée, le moteur 47 est arrêté, retiré, puis l'arbre 46 est remonté pour ramener la scie-cloche 45 dans le volume de sas 33. A cette occasion, la pastille découpée par la scie-cloche 45 est maintenue par cette dernière et ramenée simultanément dans le volume de sas 33. La vanne guillotine 20 est alors fermée, ce qui isole la bouche de dérivation 13, désormais en communication avec l'espace intérieur 4 du tronçon de conduite 2, du volume de sas 33. Le volume de sas 33 peut alors être vidangé grâce au raccord latéral 34 et ouvert en démontant et retirant le dispositif de percement 40.

La Fig. 8 illustre maintenant la turbine 90 que l'on souhaite poser dans le tronçon de conduite 2. Elle comprend une partie utile 91, en l'espèce un rotor de type boule dont les ailettes 92 sont montées sur un arbre 93 perpendiculaire à l'axe A de la circulation dans le tronçon de conduite 2, et une partie de fixation 94. La partie de fixation 94 possède un diamètre compris entre le diamètre de la bouche de dérivation 13 du côté proximal de l'épaulement 14 et le diamètre de la bouche de dérivation 13 du côté distal de l'épaulement 14 ; il est de préférence sensiblement égal, à un jeu près, à celui de la bouche de dérivation 13 du côté distal de l'épaulement 14. La partie de fixation 94 possède une surface frontale de butée 95 et une surface distale 96 munie d'un épaulement 96a. L'arbre 93 traverse de part en part la partie de fixation 94 et fait saillie sur la surface distale 96. Un joint 97, de préférence torique, peut être installé dans une rainure prévue dans la surface latérale de la partie de fixation 94, le long de sa bordure proximale. Cette surface latérale présente également des orifices de fixation 98, ici au nombre de quatre disposés à 90° les uns des autres.

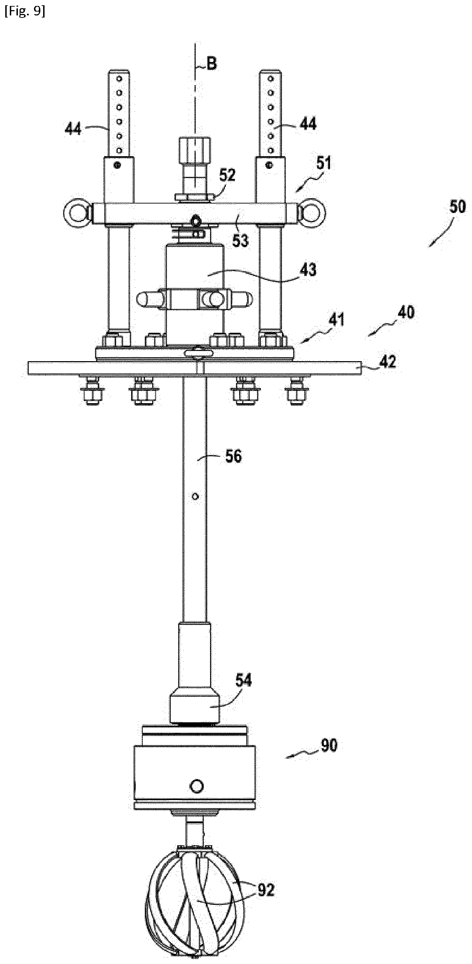

Comme cela est illustré sur la Fig. 9, la turbine 90 est ensuite installée sur un dispositif d'insertion 50. Ce dispositif d'insertion 50 comprend la même plate-forme d'insertion 41 que le dispositif de percement 40. En revanche, un arbre différent 56 est engagé dans le manchon 43.

Le dispositif d'insertion 50 comprend en outre un système anti-rotation 51 configuré pour bloquer la rotation de l'arbre 56 tout en autorisant sa translation : ce système anti-rotation 51 comprend un écrou à pans hexagonaux 52, solidaire de l'arbre 56 en rotation et libre en translation, cet écrou 52 étant bloqué en rotation dans un traverse 53 montée entre les colonnettes 44 de la plate-forme d'insertion 41.

La turbine 90 est alors montée à l'extrémité proximale de l'arbre 56 à l'aide d'un accouplement à goupille 54.

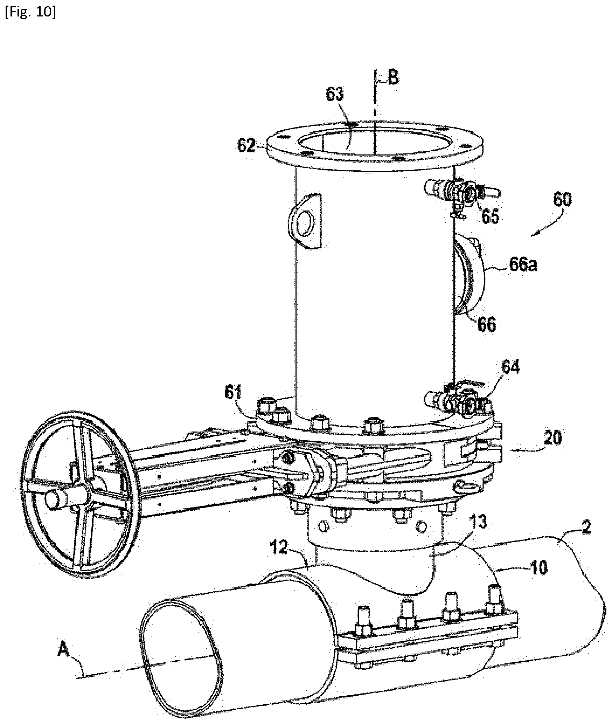

Parallèlement, comme cela est illustré sur la Fig. 10, le premier conduit de sas 30 est retiré et un deuxième conduit de sas 60, de longueur plus importante que le premier, est monté sur le côté distal de la vanne guillotine 20. La longueur du deuxième conduit de sas 60 est plus importante afin de pouvoir contenir la turbine 90 tout entière. De manière analogue au premier conduit de sas 30, ce deuxième conduit de sas 60 comprend un bride de fixation proximale 61 et une bride de fixation distale 62, l'espace intérieur du conduit de sas 60 formant le volume de sas 63.

Par ailleurs, sa paroi périphérique comprend un premier raccord latéral 64, situé à proximité de l'extrémité proximale du conduit de sas 60, et un deuxième raccord latéral 65, situé à proximité de l'extrémité distale du conduit de sas 60, permettant tous deux de connecter le volume de sas 63 avec l'extérieur. La paroi périphérique comprend également un regard latéral 66 fermé par un bouchon 66a.

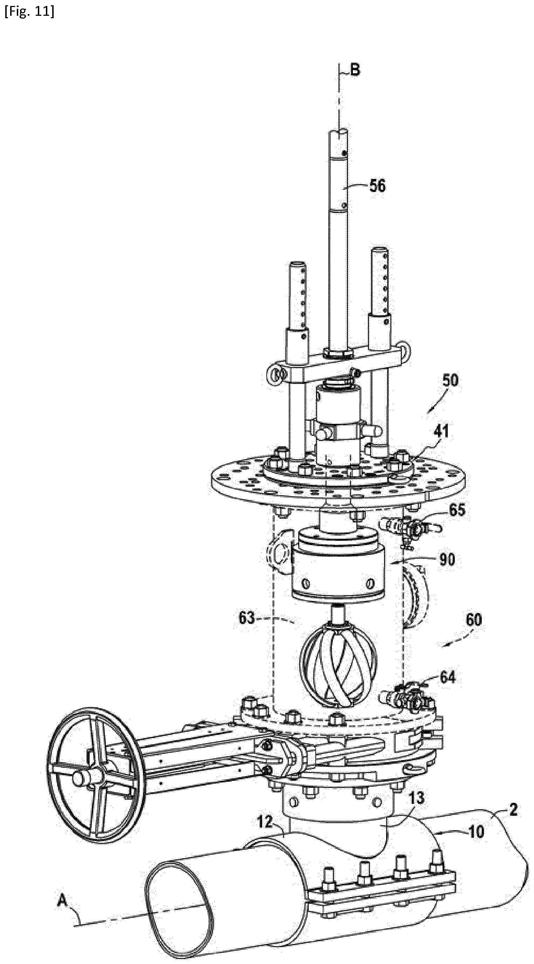

Comme cela est illustré sur la Fig. 11, la plate-forme d'insertion 41 est alors montée de manière étanche sur l'extrémité distale du deuxième conduit de sas 60, un joint pouvant être inséré entre ces deux éléments, de manière à refermer de manière étanche le volume de sas 63.

La turbine 90 se trouve alors dans le volume de sas 63. Dans un premier temps, de l'eau est injectée dans le volume de sas 63 par l'intermédiaire du premier raccord latéral 64, par exemple en connectant ce dernier au regard latéral 16 de la bouche de dérivation 13, tout en laissant l'air s'échapper par le deuxième raccord latéral 65. Puis, lorsque de l'eau s'échappe par le deuxième raccord latéral 65, on ferme le premier raccord latéral 64 et on connecte le deuxième raccord latéral 65 au raccord latéral 16 de la bouche de dérivation 13 de manière à équilibrer les pressions entre l'extrémité distale du volume de sas 63 et la bouche de dérivation 13.

La vanne guillotine 20 peut alors être ouverte, et la turbine 90 peut être poussée manuellement via l'arbre 56 à travers la voie 23 de la vanne guillotine 20 et la bouche de dérivation 13 jusqu'à pénétrer dans le tronçon de conduite 2 par l'ouverture 3 percée précédemment.

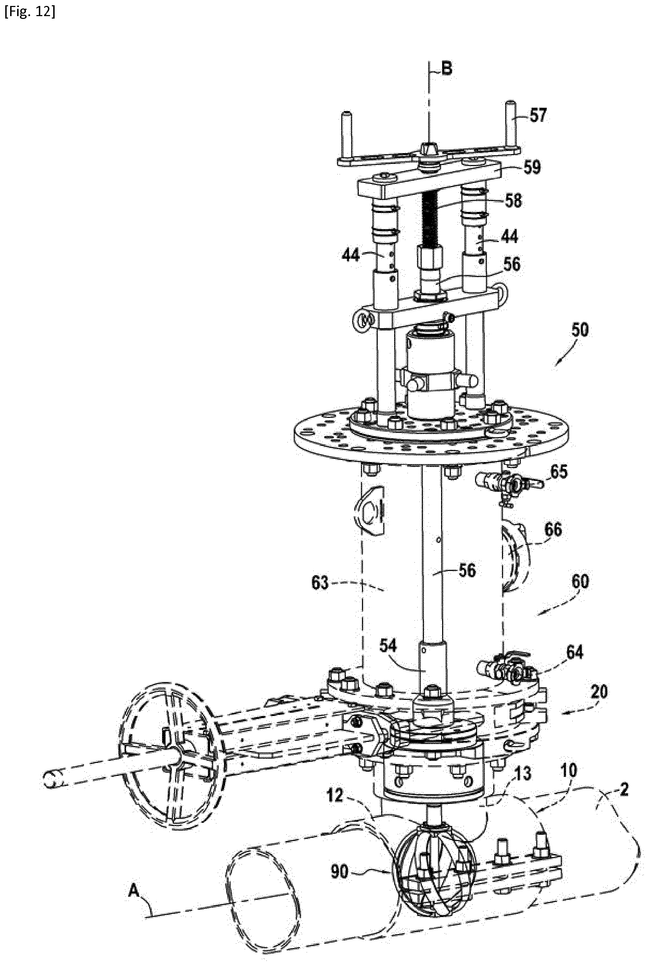

Comme cela est illustré sur la Fig. 12, l'insertion de la turbine 90 dans l'espace intérieur 4 du tronçon de conduite 2 peut être facilitée par l'utilisation d'un actionneur, en l'espèce une manivelle 57 montée au sommet de l'arbre 56 par l'intermédiaire d'une tige filetée 58 engagée dans une traverse taraudée 59 montée sur les colonnettes 44. Ainsi, lorsque la manivelle 57 est tournée, la traverse 59 étant bloquée, la tige filetée 58 descend, ce qui pousse l'arbre 56 vers le bas.

La turbine 90 est descendue de la sorte jusqu'à ce que la surface frontale 95 de sa partie de fixation 94 vienne en butée contre l'épaulement 14 de la bouche de dérivation 13. Des vis pointeau 17a sont alors engagées dans les passages de fixation 17 de la bouche de dérivation 13 et dans les orifices de fixation 98 de la turbine 90 afin de bloquer cette dernière en position.

Une fois la turbine 90 ainsi bloquée en position, le joint 97 isole l'espace de travail, et notamment le volume de sas 63, du tronçon de conduite 2. La connexion fluidique entre la bouche de dérivation 13 et le volume de sas 63 par l'intermédiaire des raccords latéraux 16 et 65 est alors coupée et le volume de sas 63 est vidangé grâce au premier raccord latéral 64. Le regard 66 est alors ouvert afin d'accéder au volume de sas 63 et rompre l'accouplement 54 entre la turbine 90 et l'arbre 56 du dispositif d'insertion 50.

Une fois l'arbre 56 désaccouplé de la sorte, il est alors possible de démonter le dispositif d'insertion 50, le conduit de sas 60 et la vanne guillotine 20.

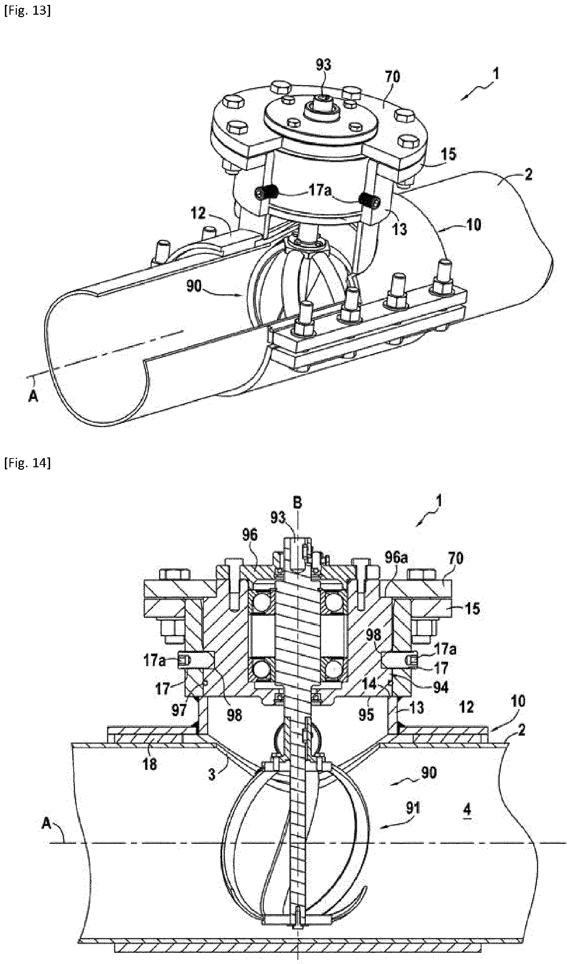

Enfin, comme cela est illustré sur les Fig. 13 et 14, une contre bride 70 est rapportée et boulonnée sur la bride de fixation 15 de la bouche de dérivation 13. Cette contre bride 70, annulaire, laisse passer en son centre l'arbre 93 de la turbine 90. En revanche, la contre bride 70 s'applique contre l'épaulement 96a de la surface distale 96 de la partie de fixation 94 de la turbine 90, ce qui assure sa fixation définitive au sein de la bouche de dérivation 13.

On obtient ainsi une installation hydraulique 1 comprenant un organe hydraulique, ici une turbine 90, posé dans un tronçon de conduite 2 à l'aide d'un collier 10 sans qu'il ait été nécessaire d'interrompre la circulation dans ledit tronçon de conduite 2.

Bien que la présente invention ait été décrite en se référant à des exemples de réalisation spécifiques, il est évident que des modifications et des changements peuvent être effectués sur ces exemples sans sortir de la portée de l'invention qui est définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Procédé de pose d'un organe hydraulique dans une conduite en charge, comprenant les étapes suivantes :
pose d'un collier (10), muni d'une bouche de dérivation (13), rapporté autour d'un tronçon de conduite (2),
installation d'un dispositif de percement (40) à l'extrémité distale d'un sas (30;60), muni d'une vanne de sectionnement (20), prévu à l'extrémité distale de la bouche de dérivation (13),
percement d'une ouverture (3) dans le tronçon de conduite (2) à l'aide du dispositif de percement (40) à travers le sas (30; 60) et la bouche de dérivation (13),
fermeture de la vanne de sectionnement (20),
retrait du dispositif de percement (40),
installation de l'organe hydraulique (90) sur un dispositif d'insertion (50),
installation du dispositif d'insertion (50) à l'extrémité distale du sas (30;60),
ouverture de la vanne de sectionnement (20), et
insertion de l'organe hydraulique (90) dans le tronçon de conduite (2) à l'aide du dispositif d'insertion (50) à travers le sas (30; 60),
la bouche de dérivation (13) et l'ouverture (3) du tronçon de conduite (2) **caractérisé en ce que** la bouche de dérivation (13) comprend un raccord latéral (16), permettant de connecter l'espace intérieur de la bouche de dérivation (13) avec l'extérieur,
**en ce que** le sas (30 ; 60) comprend au moins un raccord latéral (34, 64, 65),
permettant de connecter le volume du sas (33; 63) avec l'extérieur, et
**en ce qu'**une circulation de fluide est assurée entre la bouche de dérivation (13) et le sas (30 ; 60) pendant l'étape de percement et/ou pendant l'étape d'insertion de l'organe hydraulique (90).

2. Procédé selon la revendication 1, dans lequel le tronçon de conduite (2) est continu de l'extrémité amont à l'extrémité aval du collier (10).

3. Procédé selon la revendication 1 ou 2, dans lequel la
bouche de dérivation (13) est munie d'un épaulement interne (14), et
dans lequel l'organe hydraulique (90) est poussé vers le tronçon de conduite (2) jusqu'à ce qu'une butée (95) de l'organe hydraulique (90) atteigne l'épaulement interne (14) de la bouche de dérivation (13).

4. Procédé selon l'une quelconque des revendications 1 à 3,
dans lequel la paroi périphérique de la bouche de dérivation (13) est munie d'au moins un passage de fixation (17), et
dans lequel l'organe hydraulique (90) est fixé au moins temporairement sur la paroi périphérique de la bouche de dérivation (13).

5. Procédé selon l'une quelconque des revendications 1 à 4, dans lequel un premier sas (30) est mis en place avant l'installation du dispositif de percement (40) et un deuxième sas (60) est mis en place à la place du premier sas (30) avant l'installation du dispositif d'insertion (50).

6. Procédé selon l'une quelconque des revendications 1 à 5, dans lequel le sas (60) comprend au moins un premier raccord latéral (64) prévu à l'extrémité proximale du volume de sas (63) et un deuxième raccord latéral (65) prévu à l'extrémité distale du volume de sas (63).

7. Procédé selon l'une quelconque des revendications 1 à 6, dans lequel le sas (60) comprend au moins un regard latéral (66) fermé par un bouchon amovible (66a).

8. Procédé selon l'une quelconque des revendications 1 à 7,
dans lequel le dispositif d'insertion (50) comprend une plate-forme d'insertion (41) traversée de manière étanche par un arbre (56), et
dans lequel le dispositif d'insertion (50) comprend un système anti-rotation (51) bloquant la rotation de l'arbre (56) du dispositif d'insertion (50).

9. Procédé selon l'une quelconque des revendications 1 à 8, dans lequel une contre-bride (70) est rapportée sur la bride de fixation (15) de la bouche de dérivation (13), bloquant une portion de blocage (96a) de l'organe hydraulique (90).

10. Procédé selon l'une quelconque des revendications 1 à 9, dans lequel l'organe hydraulique est une turbine (90).

11. Installation de pose, comprenant
un collier (10), muni d'une bouche de dérivation (13), prévu pour être rapporté autour d'un tronçon de conduite (2),
un sas (30; 60), muni d'une vanne de sectionnement (20), un dispositif de percement (40), prévu pour être installé à l'extrémité distale du sas (30; 60) et pour percer une ouverture (3) dans le tronçon de conduite (2) à travers le sas (30, 60) et la bouche de dérivation (13), et
un dispositif d'insertion (50), prévu pour être installé à l'extrémité distale du sas (30; 60) et pour insérer un organe hydraulique (90) dans le tronçon de conduite (2) à travers le sas (30; 60),
la bouche de dérivation (13) et l'ouverture (3) du tronçon de conduite (2) **caractérisée en ce que** la bouche de dérivation (13) comprend un raccord latéral (16), permettant de connecter l'espace intérieur de la bouche de dérivation (13) avec l'extérieur, et
**en ce que** le sas (30 ; 60) comprend au moins un raccord latéral (34, 64, 65), permettant de connecter le volume du sas (33; 63) avec l'extérieur.

## Patentansprüche

1. Verfahren zum Anbringen eines Hydraulikorgans in einer belasteten Rohrleitung, umfassend die folgenden Schritte:
Anbringen einer mit einer Abzweigöffnung (13) versehenen Manschette (10), die um einen Rohrleitungsabschnitt (2) herum aufgesetzt wird,
Anbringen einer Durchstoßvorrichtung (40) an dem distalen Ende einer Schleuse (30; 60), versehen mit einem Absperrventil (20), vorgesehen am distalen Ende der Abzweigöffnung (13),
Durchstoßen einer Öffnung (3) in dem Rohrleitungsabschnitt (2) mit Hilfe der Durchstoßvorrichtung (40) durch die Schleuse (30; 60) und die Abzweigöffnung (13),
Schließen des Absperrventils (20),
Herausziehen der Durchstoßvorrichtung (40),
Anbringen des Hydraulikorgans (90) an einer Einführvorrichtung (50),
Anbringen der Einführvorrichtung (50) an dem distalen Ende der Schleuse (30; 60),
Öffnen des Absperrventils (20), und
Einführen des Hydraulikorgans (90) in den Rohrleitungsabschnitt (2) mit Hilfe der Einführvorrichtung (50) durch die Schleuse (30; 60), die Abzweigöffnung (13) und die Öffnung (3) des Rohrleitungsabschnitts (2),
**dadurch gekennzeichnet, dass** die Abzweigöffnung (13) einen seitlichen Anschluss (16) aufweist, der ermöglicht, den Innenraum der Abzweigöffnung (13) mit der Außenseite zu verbinden,
dass die Schleuse (30; 60) wenigstens einen seitlichen Anschluss (34, 64, 65) umfasst, der ermöglicht, das Volumen der Schleuse (33; 63) mit der Außenseite zu verbinden, und
dass eine Fluidzirkulation zwischen der Abzweigöffnung (13) und der Schleuse (30; 60) während des Schritts des Durchstoßens und/oder während des Schritts des Einführens des Hydraulikorgans (90) sichergestellt ist.

2. Verfahren nach Anspruch 1, bei dem der Rohrleitungsabschnitt (2) vom stromaufwärtigen Ende bis zum stromabwärtigen Ende der Manschette (10) durchgehend ist.

3. Verfahren nach Anspruch 1 oder 2, bei dem die Abzweigöffnung (13) mit einer Innenschulter (14) versehen ist, und
bei dem das Hydraulikorgan (90) in Richtung des Rohrleitungsabschnitts (2) gedrückt wird, bis ein Anschlag (95) des Hydraulikorgans (90) die Innenschulter (14) der Abzweigöffnung (13) erreicht.

4. Verfahren nach einem der Ansprüche 1 bis 3, bei dem die Umfangswand der Abzweigöffnung (13) mit wenigstens einem Befestigungsdurchgang (17) versehen ist, und
bei dem das Hydraulikorgan (90) wenigstens zeitweise an der Umfangswand der Abzweigöffnung (13) befestigt ist.

5. Verfahren nach einem der Ansprüche 1 bis 4, bei dem vor dem Anbringen der Durchstoßvorrichtung (40) eine erste Schleuse (30) angebracht wird und vor dem Anbringen der Einführvorrichtung (50) eine zweite Schleuse (60) an der Stelle der ersten Schleuse (30) angebracht wird.

6. Verfahren nach einem der Ansprüche 1 bis 5, bei dem die Schleuse (60) wenigstens einen ersten seitlichen Anschluss (64), welcher an dem proximalen Ende des Schleusenvolumens (63) vorgesehen ist, sowie einen zweiten seitlichen Anschluss (65), welcher an dem distalen Ende des Schleusenvolumens (63) vorgesehen ist, umfasst.

7. Verfahren nach einem der Ansprüche 1 bis 6, bei dem die Schleuse (60) wenigstens eine seitliche Schauöffnung (66) umfasst, die durch eine lösbare Verschlusskappe (66a) verschlossen ist.

8. Verfahren nach einem der Ansprüche 1 bis 7, bei dem die Einführvorrichtung (50) eine Einführplattform (41) umfasst, die von einer Welle (56) dicht durchgriffen ist,
bei dem die Einführvorrichtung (50) ein Verdrehsicherungssystem (51) umfasst, das die Drehung der Welle (56) der Einführvorrichtung (50) blockiert.

9. Verfahren nach einem der Ansprüche 1 bis 8, bei dem an den Befestigungsflansch (15) der Abzweigöffnung (13) ein Gegenflansch (70) angesetzt ist, der einen Sperrabschnitt (96a) des Hydraulikorgans (90) blockiert.

10. Verfahren nach einem der Ansprüche 1 bis 9, bei dem das Hydraulikorgan eine Turbine (90) ist.

11. Einrichtung zum Anbringen, umfassend
eine Manschette (10), die mit einer Abzweigöffnung (13) versehen ist und dazu vorgesehen ist, um einen Rohrleitungsabschnitt (2) herum aufgesetzt zu werden,
eine Schleuse (30; 60), die mit einem Absperrventil (20) ausgestattet ist,
eine Durchstoßvorrichtung (40), die dazu vorgesehen ist, an dem distalen Ende der Schleuse (30; 60) angebracht zu werden und eine Öffnung (3) in dem Rohrleitungsabschnitt (2) durch die Schleuse (30; 60) und die Abzweigöffnung (13) zu durchstoßen, und
eine Einführvorrichtung (50), die dazu bestimmt ist, an dem distalen Ende der Schleuse (30; 60) angebracht zu werden und ein Hydraulikorgan (90) durch die Schleuse (30; 60), die Abzweigöffnung (13) und die Öffnung (3) des Rohrleitungsabschnitts (2) in den Rohrleitungsabschnitt (2) einzuführen,
**dadurch gekennzeichnet, dass** die Abzweigöffnung (13) einen seitlichen Anschluss (16) aufweist, der ermöglicht, den Innenraum der Abzweigöffnung (13) mit der Außenseite zu verbinden, und
dass die Schleuse (30; 60) wenigstens einen seitlichen Anschluss (34, 64, 65) umfasst, der ermöglicht, das Volumen der Schleuse (33; 63) mit der Außenseite zu verbinden.

## Claims

1. A method for laying a hydraulic member in a loaded line, comprising the following steps:
laying a collar (10), equipped with a bypass outlet (13), added around a line section (2),
installing a piercing device (40) at the distal end of an airlock (30; 60), equipped with a shut-off valve (20), provided at the distal end of the bypass outlet (13),
piercing an opening (3) into the line section (2) using the piercing device (40) through the airlock (30; 60) and the bypass outlet (13),
closing the shut-off valve (20),
removing the piercing device (40),
installing the hydraulic member (90) on an insertion device (50),
installing the insertion device (50) at the distal end of the airlock (30; 60),
opening the shut-off valve (20), and
inserting the hydraulic member (90) into the line section (2) using the insertion device (50) through the airlock (30; 60), the bypass outlet (13) and the opening (3) of the line section (2)
**characterized in that** the bypass outlet (13) comprises a lateral fitting (16), making it possible to connect the interior space of the bypass outlet (13) with the outside,
**in that** the airlock (30; 60) comprises at least one lateral fitting (34, 64, 65), making it possible to connect the volume of the airlock (33; 63) with the outside, and
**in that** a fluid circulation is ensured between the bypass outlet (13) and the airlock (30; 60) during the step of piercing and/or during the step of inserting the hydraulic member (90).

2. The method according to claim 1, wherein the line section (2) is continuous from the upstream end to the downstream end of the collar (10).

3. The method according to claim 1 or 2, wherein the bypass outlet (13) is equipped with an inner shoulder (14), and wherein the hydraulic member (90) is pushed towards the line section (2) until a stop (95) of the hydraulic member (90) reaches the inner shoulder (14) of the bypass outlet (13).

4. The method according to any one of claims 1 to 3, wherein the peripheral wall of the bypass outlet (13) is equipped with at least one fixing passage (17), and
wherein the hydraulic member (90) is fixed at least temporarily on the peripheral wall of the bypass outlet (13).

5. The method according to any one of claims 1 to 4, wherein a first airlock (30) is placed prior to the installation of the piercing device (40) and a second airlock (60) is placed instead of the first airlock (30) prior to the installation of the insertion device (50).

6. The method according to any one of claims 1 to 5, wherein the airlock (60) comprises at least a first lateral fitting (64) provided at the proximal end of the airlock volume (63) and a second lateral fitting (65) provided at the distal end of the airlock volume (63).

7. The method according to any one of claims 1 to 6, wherein the airlock (60) comprises at least one lateral trap (66) closed by a removable plug (66a).

8. The method according to any one of claims 1 to 7, wherein the insertion device (50) comprises an insertion platform (41) through which a shaft (56) passes in a sealed manner, and
wherein the insertion device (50) comprises an anti-rotation system (51) blocking the rotation of the shaft (56) of the insertion device (50).

9. The method according to any one of claims 1 to 8, wherein a counter-flange (70) is added onto the fixing flange (15) of the bypass outlet (13), blocking a blocking portion (96a) of the hydraulic member (90).

10. The method according to any one of claims 1 to 9, wherein the hydraulic member is a turbine (90).

11. A laying installation, comprising
a collar (10), equipped with a bypass outlet (13), intended to be added around a line section (2),
an airlock (30; 60) equipped with a shut-off valve (20),
a piercing device (40), intended to be installed at the distal end of the airlock (30; 60) and to pierce an opening (3) into the line section (2) through the airlock (30, 60) and the bypass outlet (13), and
an insertion device (50), intended to be installed at the distal end of the airlock (30; 60) and to insert a hydraulic member (90) into the line section (2) through the airlock (30; 60), the bypass outlet (13) and the opening (3) of the line section (2)
**characterized in that** the bypass outlet (13) comprises a lateral fitting (16), making it possible to connect the interior space of the bypass outlet (13) with the outside, and
**in that** the airlock (30; 60) comprises at least one lateral fitting (34, 64, 65), making it possible to connect the volume of the airlock (33; 63) with the outside.
